# EUROPÄISCHE PATENTSCHRIFT

(11) **EP 3 437 173 B1**
(45) Veröffentlichungstag und Bekanntmachung des Hinweises auf die Patenterteilung: **01.07.2020**
(21) Anmeldenummer: 17717727.6
(22) Anmeldetag: 18.04.2017
(51) Int. Cl.: H02K 1/26, H02K 15/02

(54) **ROTORBALLEN UND VERFAHREN ZUM HERSTELLEN EINES ROTORBALLENS**
ROTOR BALE AND METHOD FOR PRODUCING A ROTOR BALE
CORPS DE ROTOR ET SON PROCEDE DE FABRICATION

(30) Priorität: 09.05.2016 EP 16168702
(43) Veröffentlichungstag der Anmeldung: 06.02.2019
(73) Patentinhaber: Siemens Aktiengesellschaft, 80333 München (DE)
(72) Erfinder: KOWALSKI, Matthias, 45478 Mülheim an der Ruhr (DE); LEHMANN, Christoph, 47506 Neukirchen-Vluyn (DE)
(86) Internationale Anmeldenummer: PCT/EP2017/059118
(87) Internationale Veröffentlichungsnummer: WO 2017/194271

(56) Entgegenhaltungen:
- DE-A1- 1 814 383
- GB-A- 1 403 522
- US-A1- 2003 090 170

## Beschreibung

Die Erfindung betrifft einen Rotorballen für einen Rotor einer rotierenden elektrischen Maschine, insbesondere eines Turbogenerators, aufweisend wenigstens eine senkrecht zu einer Längsmittelachse des Rotorballens verlaufende Polachse.

Des Weiteren betrifft die Erfindung ein Verfahren zum Herstellen eines Rotorballens für einen Rotor einer rotierenden elektrischen Maschine, insbesondere eines Turbogenerators.

Eine rotierende elektrische Maschine umfasst einen Stator und einen drehbar gelagerten Rotor. Der Rotor kann einen Rotorballen mit axialen Aufnahmenuten aufweisen, in denen jeweils ein Leiterabschnitt einer Rotorwicklung des Rotors angeordnet ist. Die in den Aufnahmenuten angeordneten Leiterabschnitte sind stirnseitig außerhalb des Rotorballens über Querleiterabschnitte elektrisch leitend miteinander verbunden, die auf axial einander gegenüberliegenden Seiten des Rotorballens jeweils einen Rotorwickelkopf ausbilden. Der Rotor bzw. der Rotorballen umfasst eine senkrecht zu einer Längsmittelachse des Rotorballens verlaufende Polachse, die eine Verbindungslinie zwischen den magnetischen Polen des Rotors bzw. Rotorballens darstellt. Entsprechende Ausgestaltungen sind insbesondere bei einer Ausgestaltung einer rotierenden elektrischen Maschine als Turbogenerator gegeben.

In der Regel werden Rotorwicklungen, auch Erregerwicklungen genannt, eines Turbogenerators mit einem, insbesondere lastfallspezifischen, Gleichstrom derart beaufschlagt, dass durch eine Rotation einer starr an den Turbogenerator gekoppelten Turbine eine spezifische Netzfrequenz in Höhe von 50 Hz bzw. 60 Hz in ein Stromnetz eingespeist werden kann. Voraussetzung hierfür ist, dass die Turbine mit 50 Hz bzw. 60 Hz rotiert.

Werden ausschließlich 50Hz-Turbinen eingesetzt, kann die dadurch gegebene Diskrepanz der Frequenz bei 60Hz-Stromnetzen durch pulsierende Erregerströme in Höhe von 10 Hz geschlossen werden. Ein hierbei auftretendes Problem besteht in der ungewollten Erzeugung von hohen Wirbelströmen im Rotoreisen bzw. Rotorballen. Dieser Effekt rührt daher, dass ein elektrisch leitfähiger Körper, hier der Rotorballen, von einem zeitlich veränderlichen magnetischen Fluss penetriert wird. Dieser induziert ein elektrisches Wirbelfeld, das Ströme im Kreis treibt (Wirbelströme). Diese Wirbelströme haben eine sehr hohe Stromstärke, da herkömmlich eine große leitfähige Fläche als Leiterbahn zur Verfügung steht. Aus diesen Wirbelströmen resultieren enorme Verluste, welche die rotierende elektrische Maschine in ihrem Wirkungsgrad und ihrer Ausnutzbarkeit stark limitieren.

Aus der DE 18 14 383 A1 ist ein Rotorballen für einen Rotor einer rotierenden elektrischen Maschine bekannt, der einen mehrschichtigen Schichtaufbau aus wenigstens zwei im Wechsel angeordneten, aus verschiedenen Werkstoffen hergestellten Schichten aufweist, wobei sich die Werkstoffe hinsichtlich ihrer jeweiligen elektrischen Leitfähigkeit voneinander unterscheiden.

Aus der US 2003/090170 A1 ist ein Rotorballen für einen Rotor eines synchronen Induktions-Motors bekannt, bei dem mehrere Schlitzabschnitte eine Polar-Projektion zweier magnetischer Pole bilden, die einen leicht passierbaren Weg und rechtwinklig hierzu einen schwer passierbaren Weg für den magnetischen Fluss aufweisen. Hierbei kann leitendes Material, wie zum Beispiel Aluminium, in die Schlitzabschnitte eingebracht sein.

Aus der GB 1 403 522 A ist eine dynamo-elektrische Maschine bekannt, bei der der massiv geschmiedete Rotor in seiner Oberfläche Nuten zur Aufnahme einer elektrischen Wicklung aufweist.

Eine Aufgabe der Erfindung ist es, einen Wirkungsgrad und eine Ausnutzbarkeit einer rotierenden elektrischen Maschine zu erhöhen. Speziell soll ein verbesserter Rotorballen geschaffen werden derart, dass er für Netzfrequenzgeneratoren mit pulsierenden Erregerströmen geeignet ist.

Die Aufgabe wird zum Einen durch einen Rotorballen für einen Rotor einer rotierenden elektrischen Maschine mit den Merkmalen des Anspruchs 1 und zum Anderen durch ein Verfahren zum Herstellen eines Rotorballens für einen Rotor einer rotierenden elektrischen Maschine mit den Merkmalen des Anspruchs 3 gelöst.

Ein Rotorballen für einen Rotor einer rotierenden elektrischen Maschine, insbesondere eines Turbogenerators, umfasst wenigstens eine senkrecht zu einer Längsmittelachse des Rotorballens verlaufende Polachse, wobei wenigstens ein Abschnitt des Rotorballens wenigstens zwei im Wechsel angeordnete, aus verschiedenen Werkstoffen hergestellte Schichten aufweist, wobei sich die Werkstoffe hinsichtlich ihrer jeweiligen elektrischen Leitfähigkeit voneinander unterscheiden, und wobei eine Schichtfolgerichtung eines durch die Schichten gebildeten Schichtaufbaus senkrecht zu der Polachse und der Längsmittelachse verläuft.

Erfindungsgemäß kann eine Schicht, die aus Metall oder einer Metalllegierung, insbesondere aus Stahl, hergestellt ist, hauptsächlich zum Leiten des magnetischen Flusses längs der Polachse dienen, während die von dieser Schicht in ihrem Werkstoff verschiedene andere Schicht, beispielsweise aus Metall oder einer Metalllegierung, insbesondere Stahl, den elektrischen Strom quer zur Polachse und zur Längsmittelachse unterdrückt oder unterbindet. Letztere Schicht kann beispielsweise ein Stahl mit einem erhöhten Siliziumanteil oder einem anderen Zusatzstoff sein. Die Schichten sind vorzugsweise eben ausgebildet.

Der in dem Rotorballen erzeugte magnetische Fluss kann somit mit geringem Widerstand von einem magnetischen Pol des Rotorballens zu dem anderen magnetischen Pol fließen. Gleichzeitig werden elektrische Wirbelfelder in ihren Bahnen innerhalb des Rotorballens derart eingeschränkt, dass sich die Wirbelstromverluste stark reduzieren. Dieser Sachverhalt resultiert daraus, dass sich die Wirbelströme stets transversal zu magnetischen Feldlinien ausbilden. Verringert man nun in einer solchen transversalen Wirbelstromebene die elektrische Leitfähigkeit auf erfindungsgemäße Art und Weise, reduzieren sich die Wirbelströme deutlich. Vorzugsweise ist die magnetische Leitfähigkeit der Schichten mit der höheren elektrischen Leitfähigkeit längs der Polachse möglichst hoch, wohingegen die elektrische Leitfähigkeit der Schichten mit der geringeren elektrischen Leitfähigkeit quer zu der Polachse und der Längsmittelachse einen möglichst geringen Wert haben soll. Merkliche Wirbelströme bilden sich hauptsächlich in den Bereichen zwischen zwei elektrisch geringer leitfähigen Schichten, also in den magnetisch besser leitenden Schichten mit der höheren elektrischen Leitfähigkeit.

Erfindungsgemäß werden gezielt zwei verschiedene Werkstoffe, insbesondere Stahlwerkstoffe, also Stähle mit unterschiedlichen Zusatzstoffen, derart miteinander kombiniert, dass der Rotorballen sowohl den gegebenen magnetischen Fluss tragen kann, also eine hohe Permeabilität aufweist, als auch senkrecht zu der Polachse und der Längsmittelachse durch die geringere elektrische Leitfähigkeit der einen Schichten geringer elektrisch leitfähig ist. Diese geringere Leitfähigkeit des Rotorballens bzw. dessen in dieser Richtung gegebener höherer spezifischer elektrischer Widerstand führt zu einer Reduzierung von Wirbelstromverlusten in dem Rotorballen.

Die beiden Werkstoffe sind derart zu wählen, dass beide den auftretenden mechanischen Beanspruchungen genügen, wobei der eine Werkstoff insbesondere magnetisch hoch leitfähig und elektrisch höher leitfähig ist, und der andere Werkstoff insbesondere über eine geringere elektrische Leitfähigkeit verfügt. Bei einem Zusammenführen der Schichten wird vorzugsweise eine Richtungsabhängigkeit der elektromagnetischen Eigenschaften des Rotorballens berücksichtigt. Vorzugsweise sind möglichst viele Schichtwechsel quer zur Polachse und zur Längsmittelachse vorhanden. Diese können sich beispielsweise auch in der Mikrostruktur des Materials befinden.

Mit der Erfindung können bei Turbogeneratoren mit pulsierendem Erregerstrom (Erregerfeld), wie sie eingangs beschrieben sind, die Wirbelströme im Rotorballen reduziert werden, ohne beispielweise eine herkömmliche axiale Blechung des Rotorballens vornehmen zu müssen. Dies hat einen besseren Wirkungsgrad und eine höhere Ausnutzbarkeit eines entsprechenden Turbogenerators zur Folge. Zudem ist ein erfindungsgemäßer Rotorballen kostengünstiger herstellbar als ein unter einem vergleichsweise höheren Aufwand hergestellter, geblechter Rotorballen.

Bevorzugt ist eine Stahlschicht mit der höheren elektrischen Leitfähigkeit dicker als eine Stahlschicht mit der geringeren elektrischen Leitfähigkeit. Die Auswirkungen der dickeren Stahlschichten mit der höheren elektrischen Leitfähigkeit auf einen, insbesondere pulsierenden, magnetischen Fluss sind geringer, so dass der magnetische Fluss gut durch den Rotorballen geleitet werden kann. Die erzeugten elektrischen Wirbelstrombahnen sind zudem stark in ihren Ausdehnungen eingeschränkt, was eine deutliche Reduzierung eines Wärmeeintrags in den Rotorballen und der Verluste im Rotorballen zur Folge hat.

Ein erfindungsgemäßes Verfahren zum Herstellen eines Rotorballens für einen Rotor einer rotierenden elektrischen Maschine, insbesondere eines Turbogenerators, umfasst die Schritte:
- Herstellen eines mehrschichtigen Schichtaufbaus aus wenigstens zwei im Wechsel angeordneten, aus verschiedenen Werkstoffen hergestellten Schichten, wobei sich die Werkstoffe hinsichtlich ihrer jeweiligen elektrischen Leitfähigkeit voneinander unterscheiden;
- Herstellen eines rotationssymmetrischen Rotorballenrohlings durch zerspanendes Bearbeiten des Schichtaufbaus; und
- Herstellen des Rotorballens durch Ausbilden von mehreren umfangsverteilt an dem Rotorballenrohling angeordneten, axial verlaufenden Aufnahmenuten zur Aufnahme von jeweils einem Leiterabschnitt einer Rotorwicklung des Rotors, wobei die Aufnahmenuten derart an dem Rotorballenrohling ausgebildet werden, dass der Rotorballen eine senkrecht zu einer Längsmittelachse des Rotorballens verlaufende Polachse aufweist, die parallel zu den Schichten verläuft.

Mit dem Verfahren sind die oben mit Bezug auf den Rotorballen genannten Vorteile entsprechend verbunden. Insbesondere kann der Rotorballen nach einer seiner Ausgestaltungen oder einer beliebigen Kombination von wenigstens zwei dieser Ausgestaltungen miteinander unter Verwendung des Verfahrens hergestellt werden.

Die verschiedenen Werkstoffe sind vorzugsweise verschiedene Metalle oder verschiedene Metalllegierungen, insbesondere verschiedene Stahlwerkstoffe, also Stähle mit verschiedenen Zusatzstoffen. Bei der Herstellung des mehrschichtigen Schichtaufbaus werden die einzelnen Schichten vorzugsweise stoffschlüssig flächig miteinander verbunden. Die Schichten sind vorzugsweise eben ausgebildet.

Zur Herstellung des rotationssymmetrischen Rotorballenrohlings kann als zerspanendes Fertigungsverfahren beispielsweise Drehen eingesetzt werden. Es kann aber auch ein anderweitiges zerspanendes Bearbeiten des Rotorballenrohlings vorgenommen werden.

Die Aufnahmenuten des Rotorballens sind ungleichmäßig umfangsverteilt an dem Rotorballen angeordnet. Insbesondere sind im Bereich jedes magnetischen Pols des Rotorballens keine Aufnahmenuten an dem Rotorballen angeordnet. Die Aufnahmenuten verlaufen parallel zur Längsmittelachse des Rotorballens. Die Aufnahmenuten können beispielsweise durch Fräsen an dem Rotorballenrohling ausgebildet werden.

Mit dem Verfahren kann somit erreicht werden, dass die elektrische Leitfähigkeit quer zur Polachse und zur Längsmittelachse verringert und die magnetische Leitfähigkeit parallel zur Polachse möglichst uneingeschränkt aufrechterhalten wird. Deshalb ist beim Ausbilden der Aufnahmenuten im Herstellungsverfahren auf die Ausrichtung des Schichtaufbaus zu achten. Insbesondere müssen die Aufnahmenuten derart positioniert werden, dass die senkrecht zu der Längsmittelachse verlaufende Polachse parallel zu den Schichten verläuft.

Bevorzugt wird der mehrschichtige Schichtaufbau durch ein Schmiedeverfahren hergestellt. Beispielsweise können bereits während eines Schmiedeverfahrens Schichten mit geringerer elektrischer Leitfähigkeit eingebracht werden. Eine den Rotorballen vollständig durchlaufende durchgehende Anordnung der Schichten mit geringerer elektrischer Leitfähigkeit ist nicht zwangsläufig notwendig, kann aber vorgenommen werden. Zur Herstellung des Schichtaufbaus kann beispielsweise zunächst eine dünne Stahlschicht mit geringerer elektrischer Leitfähigkeit auf eine erhitzte Stahlschicht mit höherer elektrischer Leitfähigkeit und sehr hoher magnetischer Permeabilität aufgebracht werden. Während des Schmiedeverfahrens können mehrere solcher geringer elektrisch leitenden Schichten zwischen ferromagnetische Stahlschichten mit höherer elektrischer Leitfähigkeit eingebracht werden. Eine abwechselnde Schichtung der hochmagnetischen Stahlschichten und der speziellen elektrisch geringer leitenden Stahlschichten mit einer höheren Anzahl an Schichten verstärkt den erfindungsgemäßen Effekt.

Der mehrschichtige Schichtaufbau wird bevorzugt durch Schmiedefalten hergestellt. Hierbei kann ein die beiden verschiedenen Schichten aufweisender Werkstoff mittels eines Schmiedehammers gestreckt werden. Anschließend kann das so hergestellte gestreckte zweischichtige Werkstück gespalten werden. Danach kann ein beim Spalten abgetrennter Werkstückabschnitt umgeschlagen und hierdurch auf dem anderen Werkstückabschnitt angeordnet werden. Dieser Faltvorgang wird derart oft wiederholt, bis die gewünschte Anzahl an Schichten erreicht ist, wobei sich bei jeder Faltung die Anzahl der Schichten verdoppelt.

Im Folgenden wird die Erfindung unter Bezugnahme auf die anliegenden Figuren anhand bevorzugter Ausführungsformen beispielhaft erläutert, wobei die nachfolgend dargestellten Merkmale sowohl jeweils für sich genommen als auch in unterschiedlicher Kombination miteinander einen Aspekt der Erfindung darstellen können. Es zeigen:
Fig. 1 eine schematische Querschnittsdarstellung eines Ausführungsbeispiels für einen erfindungsgemäßen Rotorballen; und
Fig. 2 eine schematische Darstellung eines Ausführungsbeispiels für ein erfindungsgemäßes Verfahren.

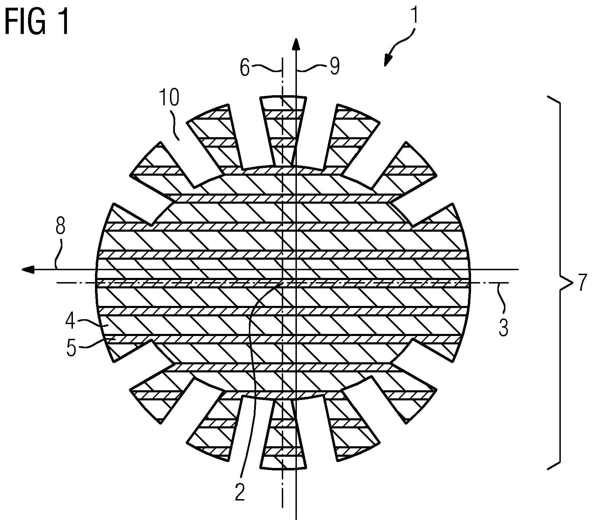

Fig. 1 zeigt eine schematische Querschnittsdarstellung eines Ausführungsbeispiels für einen erfindungsgemäßen Rotorballen 1 für einen Rotor einer rotierenden elektrischen Maschine in Form eines Turbogenerators.

Der Rotorballen 1 umfasst eine senkrecht zu einer Längsmittelachse 2 des Rotorballens 1 verlaufende Polachse 3. Der gesamte Rotorballen 1 umfasst zudem zwei im Wechsel angeordnete, aus verschiedenen Stahlwerkstoffen hergestellte, ebene Stahlschichten 4 und 5. Die Stahlwerkstoffe unterscheiden sich hinsichtlich ihrer jeweiligen elektrischen Leitfähigkeit voneinander. Eine Schichtfolgerichtung 6 eines durch die Stahlschichten 4 und 5 gebildeten Schichtaufbaus 7 verläuft senkrecht zu der Polachse 3 und der Längsmittelachse 2. Die Stahlschichten 4 mit der höheren elektrischen Leitfähigkeit sind dicker als die Stahlschichten 5 mit der geringeren elektrischen Leitfähigkeit. Der Rotorballen 1 ist entsprechend dem Pfeil 8 parallel zur Polachse 3 magnetisch hoch leitfähig und entsprechend dem Pfeil 9 senkrecht zu der Polachse 3 und der Längsmittelachse 2 geringer elektrisch Leitfähig als parallel zur Polachse 3.

An dem Rotorballen 1 sind ferner mehrere axial verlaufende Aufnahmenuten 10 zur Aufnahme von jeweils einem nicht gezeigten Leiterabschnitt einer Rotorwicklung des Rotors umfangsverteilt angeordnet. Die Aufnahmenuten 10 sind derart ungleichmäßig umfangsverteilt an dem Rotorballen 1 angeordnet, dass der Rotorballen 1 die senkrecht zu der Längsmittelachse 2 verlaufende Polachse 3 aufweist, die parallel zu den Stahlschichten 4 und 5 verläuft.

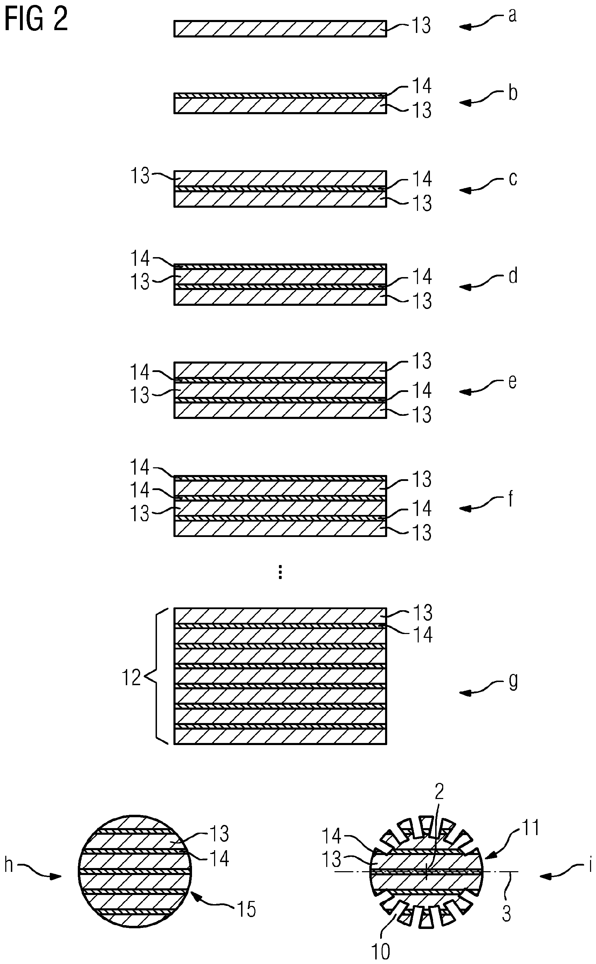

Fig. 2 zeigt eine schematische Darstellung eines Ausführungsbeispiels für ein erfindungsgemäßes Verfahren zum Herstellen eines Rotorballens 11 für einen Rotor einer rotierenden elektrischen Maschine in Form eines Turbogenerators. Der fertige Rotorballen 11 ist in Schritt i) von Fig. 2 im Querschnitt dargestellt.

Zunächst wird ein mehrschichtiger Schichtaufbau 12 aus zwei im Wechsel angeordneten, aus verschiedenen Stahlwerkstoffen hergestellten Stahlschichten 13 und 14 hergestellt, wobei sich die Stahlwerkstoffe hinsichtlich ihrer jeweiligen elektrischen Leitfähigkeit voneinander unterscheiden. Hierzu wird zunächst eine ebene Stahlschicht 13 mit höherer elektrischer Leitfähigkeit bereitgestellt (Schritt a)). In einem nächsten Schritt b) wird auf die Stahlschicht 13 eine dünnere ebene Stahlschicht 14 mit geringerer elektrischer Leitfähigkeit aufgebracht. In einem nächsten Schritt c) wird auf die Stahlschicht 14 wieder eine dickere ebene Stahlschicht 13 mit höherer elektrischer Leitfähigkeit aufgebracht. In einem nächsten Schritt d) wird auf die letzte Stahlschicht 13 eine weitere dünnere ebene Stahlschicht 14 mit geringerer elektrischer Leitfähigkeit aufgebracht. In einem nächsten Schritt e) wird auf die letzte Stahlschicht 14 wieder eine dickere ebene Stahlschicht 13 mit höherer elektrischer Leitfähigkeit aufgebracht. In einem nächsten Schritt f) wird auf die letzte Stahlschicht 13 eine weitere dünnere ebene Stahlschicht 14 mit geringerer elektrischer Leitfähigkeit aufgebracht. Solche Schichtungsschritte werden wiederholt, bis in dem letzten Schritt g) die letzte Stahlschicht 13 auf die vorletzte Stahlschicht 14 aufgebracht worden ist. Hierdurch wird der Schichtaufbau 12 hergestellt.

In einem Schritt h) wird ein rotationssymmetrischer Rotorballenrohling 15 durch zerspanendes Bearbeiten, beispielsweise Drehen, des Schichtaufbaus 12 hergestellt.

In Schritt i) wird der Rotorballen 11 durch Ausbilden von mehreren umfangsverteilt an dem Rotorballenrohling 15 angeordneten, axial verlaufenden Aufnahmenuten 10 zur Aufnahme von jeweils einem nicht gezeigten Leiterabschnitt einer Rotorwicklung des Rotors hergestellt. Die Aufnahmenuten 10 werden derart an dem Rotorballenrohling 15 ausgebildet, dass der Rotorballen 11 eine senkrecht zu einer Längsmittelachse 2 des Rotorballens 11 verlaufende Polachse 3 aufweist, die parallel zu den Stahlschichten 13 und 14 verläuft. Der mehrschichtige Schichtaufbau 12 kann hierbei durch ein Schmiedeverfahren hergestellt werden. Beispielsweise kann der mehrschichtige Schichtaufbau 12 durch Schmiedefalten hergestellt werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Rotorballen (1; 11) für einen Rotor einer rotierenden elektrischen Maschine, insbesondere eines Turbogenerators, aufweisend wenigstens eine senkrecht zu einer Längsmittelachse (2) des Rotorballens (1; 11) verlaufende Polachse (3), wobei wenigstens ein Abschnitt des Rotorballens (1; 11) wenigstens zwei im Wechsel angeordnete, aus verschiedenen Werkstoffen hergestellte Schichten (4, 5; 13, 14) aufweist, wobei sich die Werkstoffe hinsichtlich ihrer jeweiligen elektrischen Leitfähigkeit voneinander unterscheiden,
wobei eine Schichtfolgerichtung (6) eines durch die Schichten (4, 5; 13, 14) gebildeten Schichtaufbaus (7; 12) senkrecht zu der Polachse (3) und der Längsmittelachse (2) verläuft und wobei der Rotorballen (1; 11) parallel zur Polachse (3) magnetisch hoch leitfähig ist,
**dadurch gekennzeichnet, dass** der Rotorballen (1; 11) mehrere umfangsverteilt an dem Rotorballenrohling (15) angeordnete, axial verlaufende Aufnahmenuten (10) zur Aufnahme von jeweils einem Leiterabschnitt einer Rotorwicklung des Rotors ausbildet,
wobei die Aufnahmenuten (10) derart an dem Rotorballenrohling (15) ausgebildet sind, dass der Rotorballen (1; 11) eine senkrecht zu einer Längsmittelachse (2) des Rotorballens (1; 11) verlaufende Polachse (3) aufweist, die parallel zu den Schichten (4, 5; 13, 14) verläuft.

2. Rotorballen (1; 11) gemäß Anspruch 1,
wobei die Schicht (4; 13) mit der höheren elektrischen Leitfähigkeit dicker als die Schicht (5; 14) mit der geringeren elektrischen Leitfähigkeit ist.

3. Verfahren zum Herstellen eines Rotorballens (1; 11) nach einem der Ansprüche 1 oder 2 für einen Rotor einer rotierenden elektrischen Maschine, insbesondere eines Turbogenerators, aufweisend die Schritte:
- Herstellen eines mehrschichtigen Schichtaufbaus (7; 12) aus wenigstens zwei im Wechsel angeordneten, aus verschiedenen Werkstoffen hergestellten Schichten (4, 5; 13, 14), wobei sich die Werkstoffe hinsichtlich ihrer jeweiligen elektrischen Leitfähigkeit voneinander unterscheiden;
- Herstellen eines rotationssymmetrischen Rotorballenrohlings (15) durch zerspanendes Bearbeiten des Schichtaufbaus (7; 12);
**gekennzeichnet durch**
- Herstellen des Rotorballens (1; 11) durch Ausbilden von mehreren umfangsverteilt an dem Rotorballenrohling (15) angeordneten, axial verlaufenden Aufnahmenuten (10) zur Aufnahme von jeweils einem Leiterabschnitt einer Rotorwicklung des Rotors, wobei die Aufnahmenuten (10) derart an dem Rotorballenrohling (15) ausgebildet werden, dass der Rotorballen (1; 11) eine senkrecht zu einer Längsmittelachse (2) des Rotorballens (1; 11) verlaufende Polachse (3) aufweist, die parallel zu den Schichten (4, 5; 13, 14) verläuft.

4. Verfahren gemäß Anspruch 3,
wobei der mehrschichtige Schichtaufbau (7; 12) durch ein Schmiedeverfahren hergestellt wird.

5. Verfahren gemäß Anspruch 4,
wobei der mehrschichtige Schichtaufbau (7; 12) durch Schmiedefalten hergestellt wird.

## Claims

1. Rotor body (1; 11) for a rotor of a rotating electrical machine, in particular of a turbogenerator, having at least one pole axis (3) running perpendicular to a longitudinal centre axis (2) of the rotor body (1; 11),
wherein at least one section of the rotor body (1; 11) has at least two alternately arranged layers (4, 5; 13, 14) produced from different materials,
wherein the materials differ from one another in terms of their respective electrical conductivity,
wherein a layer sequence direction (6) of a layer structure (7; 12) formed by the layers (4, 5; 13, 14) runs perpendicular to the pole axis (3) and to the longitudinal centre axis (2) and wherein the rotor body (1; 11) is highly magnetically conductive parallel to the pole axis (3),
**characterized in that**
the rotor body (1; 11) forms a plurality of axially running reception grooves (10), arranged distributed over the circumference of the rotor body blank (15), for receiving a respective conductor section of a rotor winding of the rotor, wherein the reception grooves (10) are formed on the rotor body blank (15) such that the rotor body (1; 11) has a pole axis (3) running perpendicular to a longitudinal centre axis (2) of the rotor body (1; 11) and that runs parallel to the layers (4, 5; 13, 14).

2. Rotor body (1; 11) according to Claim 1,
wherein the layer (4; 13) having the higher electrical conductivity is thicker than the layer (5; 14) having the lower electrical conductivity.

3. Method for producing a rotor body (1; 11) according to either of Claims 1 and 2 for a rotor of a rotating electrical machine, in particular of a turbogenerator, having the steps of:
- producing a multilayer layer structure (7; 12) consisting of at least two alternately arranged layers (4, 5; 13, 14) produced from different materials, wherein the materials differ from one another in terms of their respective electrical conductivity;
- producing a rotationally symmetrical rotor body blank (15) by machining the layer structure (7; 12);
**characterized by**
- producing the rotor body (1; 11) by forming a plurality of axially running reception grooves (10), arranged distributed over the circumference of the rotor body blank (15), for receiving a respective conductor section of a rotor winding of the rotor, wherein the reception grooves (10) are formed on the rotor body blank (15) such that the rotor body (1; 11) has a pole axis (3) running perpendicular to a longitudinal centre axis (2) of the rotor body (1; 11) and that runs parallel to the layers (4, 5; 13, 14).

4. Method according to Claim 3,
wherein the multilayer layer structure (7; 12) is produced using a forging method.

5. Method according to Claim 4,
wherein the multilayer layer structure (7; 12) is produced by fold-forging.

## Revendications

1. Corps de rotor (1 ; 11) pour un rotor d'une machine électrique rotative, en particulier d'un turbogénérateur, présentant au moins un axe de pôle (3) vertical à un axe médian longitudinal (2) du corps de rotor (1 ; 11), dans lequel au moins un tronçon du corps de rotor (1 ; 11) présente au moins deux couches (4, 5 ; 13, 14) fabriquées dans des matériaux différents, disposées en alternance, dans lequel les matériaux se différencient entre eux par leur conductivité électrique respective, dans lequel un sens (6) des couches d'un montage (7 ; 12) de couches formé par les couches (4, 5 ; 13, 14) est vertical à l'axe de pôle (3) et à l'axe médian longitudinal (2) et dans lequel le corps de rotor (1 ; 11) est conducteur à haut magnétisme parallèlement à l'axe de pôle (3) ,
**caractérisé en ce que**
le corps de rotor (1 ; 11) forme plusieurs rainures de réception (10) axiales disposées réparties sur le pourtour de l'ébauche de corps de rotor (15) pour recevoir un tronçon conducteur respectif d'un bobinage de rotor du rotor,
dans lequel les rainures de réception (10) sont ainsi formées sur l'ébauche de corps de rotor (15) que le corps de rotor (1 ; 11) présente un axe de pôle (3) vertical à un axe médian longitudinal (2) du corps de rotor (1 ; 11) qui est parallèle aux couches (4, 5 ; 13, 14).

2. Corps de rotor (1 ; 11) selon la revendication 1,
dans lequel la couche (4 ; 13) avec la conductivité électrique plus élevée est plus épaisse que la couche (5 ; 14) avec la conductivité électrique plus faible.

3. Procédé de fabrication d'un corps de rotor (1 ; 11) selon l'une des revendications 1 ou 2 pour un rotor d'une machine électrique rotative, en particulier d'un turbogénérateur, présentant les étapes de :
- construction d'un montage (7 ; 12) de couches multi-couches d'au moins deux couches (4, 5 ; 13, 14) fabriquées dans des matériaux différents, disposées en alternance, dans lequel les matériaux se différencient entre eux par leur conductivité électrique respective ;
- construction d'une ébauche de corps de rotor (15) symétrique en rotation par usinage avec enlèvement de copeaux du montage (7 ; 12) de couches ;
**caractérisé par**
- la construction du corps de rotor (1 ; 11) par formation de plusieurs rainures de réception (10) axiales disposées réparties sur le pourtour de l'ébauche de corps de rotor (15) pour recevoir un tronçon conducteur respectif d'un bobinage de rotor du rotor, dans lequel les rainures de réception (10) sont ainsi formées sur l'ébauche de corps de rotor (15) que le corps de rotor (1 ; 11) présente un axe de pôle (3) vertical à un axe médian longitudinal (2) du corps de rotor (1 ; 11) qui est parallèle aux couches (4, 5 ; 13, 14).

4. Procédé selon la revendication 3, dans lequel le montage (7 ; 12) de couches multi-couches est fabriqué par un procédé de forgeage.

5. Procédé selon la revendication 4, dans lequel le montage (7 ; 12) de couches multi-couches est fabriqué par plis de forgeage.
